Europäisches Patentamt

European Patent Office

Office européen des brevets

(19)

(11) Veröffentlichungsnummer: **0 062 923**
A2

(12) # EUROPÄISCHE PATENTANMELDUNG

(21) Anmeldenummer: 82103146.5

(22) Anmeldetag: 14.04.82

(51) Int. Cl.³: **G 11 B 25/04**
G 11 B 19/20, G 11 B 17/02
G 11 B 5/56

(30) Priorität: 15.04.81 DE 3115264

(43) Veröffentlichungstag der Anmeldung:
20.10.82 Patentblatt 82/42

(84) Benannte Vertragsstaaten:
AT BE CH FR GB IT LI NL SE

(71) Anmelder: WOELKE MAGNETBANDTECHNIK GMBH &
CO. KG
Woelke-Strasse 2-3
D-8069 Schweitenkirchen(DE)

(71) Anmelder: EBAUCHES BETTLACH S.A.
Dorfstrasse 2
CH-2544 Bettlach(CH)

(72) Erfinder: Franke, Konrad, Dipl.-Ing.
St.-Kastulus-Strasse 3
D-8069 Schweitenkirchen(DE)

(72) Erfinder: Weber, Christoph
Maisteigstrasse 5
D-8057 Eching(DE)

(72) Erfinder: Bachmann, Peter
Sonnenrain 4
CH-2544 Bettlach(CH)

(74) Vertreter: Patentanwälte Schaumburg, Schulz-Dörlam
& Thoenes
Mauerkircherstrasse 31
D-8000 München 80(DE)

(54) Gerät zur magnetischen Tonaufzeichnung und -wiedergabe.

(57) Ein Gerät zur magnetischen Tonaufzeichnung und -wiedergabe auf einer vorzugsweise flexiblen Magnetspeicherplatte enthält als Antriebsmechanik ein Federwerk und eine nur die Elektronik für Aufzeichnung und Wiedergabe speisende Stromquelle. Dadurch ist ein Aufbau in Kreditkartengröße möglich.

EP 0 062 923 A2

Gerät zur magnetischen Tonaufzeichnung und
-wiedergabe

Die Erfindung betrifft ein Gerät zur magnetischen
Tonaufzeichnung und -wiedergabe, umfassend ein Gerätegehäuse, eine Antriebsvorrichtung für eine
Magnetspeicherplatte als Aufzeichnungsträger, einen
relativ zu dieser verstellbar angeordneten Aufzeichnungs- und Wiedergabe-Magnetkopf, eine elektronische
Aufzeichnungs- und Wiedergabe-Schaltung und eine
Stromquelle.

Geräte dieser Art mit starren Magnetspeicherplatten
sind zum einen als Großgeräte für Datenverarbeitungsanlagen und zum anderen in Form von Tischgeräten als Diktiergeräte bekannt. Ferner sind transportable Diktiergeräte bekannt, die mit Magnetbandkassetten arbeiten. Auch wenn diese tragbaren Geräte bereits relativ kleine Abmessungen haben, so sind sie
doch immer noch so groß und dick, daß es unbequem
wäre, sie beispielsweise in eine Jackettasche zu
stecken. Das bedeutet, daß man für das Mitnehmen
eines solchen Gerätes doch eine Aktentasche benötigt,
wenn man das Gerät nicht ständig in der Hand tragen
will. Diese bisher bekannten Geräte können aufgrund
ihrer technischen Konzeption auch praktisch nicht
kleiner gebaut werden. Die Magnetbandkassette benötigt auf alle Fälle einen vorgegebenen Raum sowie
eine Antriebsvorrichtung mit zwei Antriebswellen und
einem Umschaltgetriebe. Für den Antrieb der Bandspulen, insbesondere den Schnellauf beim Zurückspulen des Bandes wird eine nicht unerhebliche Antriebsleistung benötigt, die wiederum den Einbau von Akkumulatoren oder Batterien einer bestimmten Größe erfordert, wenn man eine vernünftige Betriebsdauer des Gerätes erreichen will.

Der Erfindung liegt die Aufgabe zugrunde, ein Gerät der eingangs genannten Art anzugeben, das kleiner und vor allem dünner als die bisher bekannten tragbaren Geräte zur magnetischen Tonaufzeichnung und -wiedergabe ist und dabei dennoch eine vergleichbare Betriebsdauer und Speicherkapazität besitzt.

Diese Aufgabe wird erfindungsgemäß dadurch gelöst, daß die Stromquelle im wesentlichen nur die Aufzeichnungs- und Wiedergabe-Schaltung speist und daß die Antriebsvorrichtung von einem mechanischen Federwerk gebildet ist.

Aus der Uhrenindustrie ist es an sich bekannt, sehr flache Federwerke zu bauen, die dennoch eine relativ lange Antriebsdauer gewährleisten. Seit Jahren wird jedoch nicht nur auf dem Gebiet der Geräte zur magnetischen Tonaufzeichnung und -wiedergabe- sondern gerade auch auf dem Gebiet der Uhren von der Fachwelt angestrebt, mechanische Antriebe durch elektrische Antriebe und mechanische Funktionen durch elektronische Schaltungen zu ersetzen. So ist es denn außerordentlich überraschend, daß gerade der Rückgriff auf ein mechanisches Antriebssystem bei einem typischerweise in das Gebiet der Elektrotechnik und Elektronik fallenden Gerät zur Lösung der oben genannten Aufgabe führt. Da, wie gesagt, sehr flache leistungsfähige Federwerke hergestellt werden können, läßt sich in Verbindung mit einer ihrerseits sehr dünnen, insbesondere flexiblen Magnetspeicherplatte eine sehr geringe Bauhöhe des Gerätes erreichen. Die Magnetspeicherplatte benötigt bei vergleichbarer Speicherkapazität ein wesentlich geringeres Volumen als die herkömmlichen Magnetbandkassetten, da diese nicht nur einen toten Raum im Kassettengehäuse, sondern auch zwei Spulen umfassen, von denen praktisch nur eine gefüllt ist, während die andere als Leerspule benötigt wird. Da elektrische Leistung nur zum Betrieb der Aufzeichnungs- und Wiedergabe-Schaltung benötigt wird, deren Leistungsbedarf verglichen mit dem Leistungsbedarf eines elektrischen Platten- oder Spulenantriebs verschwindend gering ist, genügt als Stromquelle eine Miniaturbatterie oder ein Miniaturakkumulator. Die Kombination der vorstehend beschriebenen Merkmale ermöglicht es, ein Gerät der eingangs genannten Art mit einem Gehäuse anzugeben, dessen Grundfläche etwa der Größe einer herkömmlichen Kreditkarte entspricht und dessen Dicke wenige Millimeter beträgt. Ein solches Gerät kann mühelos in einer Brieftasche untergebracht werden.

Die Steuerung des Magnetkopfes erfolgt vorzugsweise in der Weise, daß er an einem Magnetkopfträger angeordnet ist, der seinerseits an einem gehäusefesten Teil, z.B. zwischen Lagerplatten beweglich gelagert ist und mit dem Federwerk in Antriebsverbindung steht, wobei der Magnetkopfträger mit dem Federwerk zweckmäßigerweise über ein Stellgetriebe koppelbar ist.

Um bereits diktierte Abschnitte abhören oder korrigieren zu können, umfaßt das Stellgetriebe vorzugsweise eine Kupplungsanordnung zur wahlweisen Unterbrechung der Antriebsverbindung zwischen dem Federwerk und dem Magnetkopfträger, wobei Mittel vorgesehen sind, um den Magnetkopfträger bei Betätigung der Kupplung in Richtung auf seine dem Aufzeichnungsbeginn entsprechende Nullstellung zurückzustellen. Im Gegensatz zu den elektrisch betriebenen Geräten, bei denen die Drehrichtung des Antriebs beim Zurückstellen geändert werden muß, wird bei der erfindungsgemäßen Lösung also lediglich die Antriebsverbindung zwischen dem Federwerk und dem Magnetkopfträger unterbrochen und dieser auf andere Weise zurückgestellt. Dies kann beispielsweise dadurch erfolgen, daß das Stellgetriebe eine vom Federwerk angetriebene, mindestens annähernd radial bezüglich der Magnetspeicherplatte gerichtete Gewindespindel aufweist, daß mit dem Magnetkopfträger ein wahlweise mit der Gewindespindel in Eingriff bringbares Eingriffelement verbunden ist und daß der Magnetkopfträger in Richtung auf seine Nullstellung vorgespannt ist, wobei die Antriebe von Magnetspeicherplatte und Gewindespindel derart aufeinander abgestimmt sind, daß eine Umdrehung der Gewindespindel einer Plattenumdrehung oder einem ganzteiligen Vielfachen davon entspricht. Durch das letztgenannte Merkmal wird sichergestellt, daß in jeder Stellung des Eingriffselementes an der Spindel der Magnetkopf sich genau über einer Windung der spiraligen Aufzeichnungsspur befindet.

Der Eingriff zwischen dem Eingriffselement und der Gewindespindel läßt sich auf einfache Weise dadurch herstellen und lösen, daß das Eingriffselement zwei im wesentlichen senkrecht zur Spindelachse verstellbare und zum Eingriff in die Gewindegänge der Gewindespindel bestimmte keilförmige Spurkörper umfaßt, die beiderseits der Spindelachse relativ zueinander derart angeordnet sind, daß jeweils nur einer von ihnen in den Gewindegang eingreift und daß ihre einander zugewandten Keilscheitel in Richtung der Spindelachse um n x h gegeneinander versetzt sind, wobei n Null oder eine ganze Zahl und h die Steigung des Spindelgewindes bezeichnen. Das bedeutet, daß bei Eingriff eines keilförmigen Spurkörpers in einen Gewindegang der andere Spurkörper mit seinem Keilscheitel der Scheitellinie des Gewindeganges gegenüberliegt. Wird der eine Spurkörper aus dem Gewindegang herausgezogen, so erfährt er unter der Vorspannung, die auf den Magnetkopfträger einwirkt, eine axiale Verschiebung und gleitet somit an einer Flanke des Gewindeganges aus diesem heraus, während umgekehrt der andere Spurkörper entlang einer Flanke des Gewindeganges in diesen hineingeführt wird. Bei nochmaligem Wechsel des Eingriffes der beiden Spurkörper wird auf diese Weise das aus den beiden Spurkörpern bestehende Eingriffselement um eine Windung des Spindelgewindes axial versetzt. Um die Spurkörper in und außer Eingriff mit dem Spindelgewinde zu bringen, sind die Spurkörper vorzugsweise an mit dem Magnetkopfträger verbundenen Federschenkeln angeordnet und in Richtung auf die Gewindespindel vorgespannt, wobei zwischen den Federschenkeln ein Spreizkörper angeordnet ist, durch dessen Betätigung teilweise der eine oder der andere Spurkörper in Eingriff mit der Gewindespindel bringbar ist. Es kann auch vorgesehen sein, daß in einer zweiten Stellung des Spreizkörpers beide Spurkörper von der Gewindespindel abhebbar sind, so daß der Magnetkopfträger unter der auf ihn einwirkenden Vorspannung in seine Nullstellung zurückkehrt. Der Spreizkörper kann beispielsweise von einer sich parallel zur Gewindespindel über mindestens deren Länge erstreckenden Flachstange gebildet sein, die um ihre Längsachse schwenkbar gelagert und durch ein Bedienungselement des Gerätes verschwenkbar ist. Durch ein leichtes Kippen der Flachstange werden die beiden Federschenkel mit den Spurkörpern gespreizt, wobei je nach der Kipprichtung der Flachstange entweder nur ein Eingriffswechsel der Spurkörper oder ein Ausheben beider Spurkörper aus dem Spindelgewinde stattfindet.

Um eine rasche Verschiebung des Magnetkopfes über eine von der Bedienungsperson gewünschte Distanz zu ermöglichen, kann auch vorgesehen sein, daß der Eingriff zwischen der Gewindespindel und dem Eingriffselement von außen her unter Umgehung des Bedienungselementes lösbar und der Magnetkopfträger vorwärts oder rückwärts über eine beliebige Strecke verstellbar ist.

Das Federwerk ist vorzugsweise mittels eines Handrädchens aufziehbar, das von der Bedienungsperson während der Benutzung des Gerätes ohne Mühe gedreht werden kann, so daß das Federwerk stets ausreichend gespannt ist, selbst wenn der Magnetkopf häufiger zurückgetastet werden muß. Darüber hinaus kann eine Anzeigevorrichtung für den Spannungszustand der Antriebsfeder vorgesehen sein. Eine solche Anzeigevorrichtung kann mit geringem konstruktiven Aufwand dadurch gebildet werden, daß die Anzeigevorrichtung eine von der Federwelle antreibbare Welle aufweist, die von einer sich in Entspannungsrichtung der Antriebsfeder festziehenden Schlingfeder umgeben ist und auf der ein Schleppzeiger gelagert ist, dessen Stellung durch ein Gehäusefenster sichtbar ist. Die Schlingfeder zieht sich nach dem Aufziehen des Federwerkes um die sie durchsetzende Welle, wobei jedoch ein am Gehäuse eingehängtes Ende der Schlingfeder mit einer gewissen Elastizität durchfedert. Das Ausmaß dieser Durchfederung hängt von der Spannung der Antriebsfeder ab. Der Schleppzeiger, der mit einer gewissen Reibung auf der Welle sitzt, wird bei diesem Durchfedern von der Welle mitgenommen, so daß seine Stellung ein Maß für das Durchfedern der Schlingfeder und damit auch für den Spannungszustand der Antriebsfeder ist.

Weitere Merkmale und Vorteile der Erfindung ergeben sich aus den weiteren Unteransprüchen und der folgenden Beschreibung, welche in Verbindung mit den beigefügten Figuren anhand eines Ausführungsbeispiels erläutert. Es zeigen:

Fig. 1 und 2 die Vorderseite bzw. Rückseite eines erfindungsgemäßen Gerätes,

Fig. 3 eine schematische Draufsicht auf das Antriebssystem für die Magnetspeicherplatte und den Magnetkopf,

Fig. 4 einen die Achse der Gewindespindel ent-

0062923

- 8 -

haltenden Teilschnitt längs Linie
IV-IV,

Fig. 5 einen Teilschnitt senkrecht zur Achse
der Gewindespindel längs Linie V-V und

Fig. 6 einen Teilschnitt durch das Federwerk
längs Linie VI-VI.

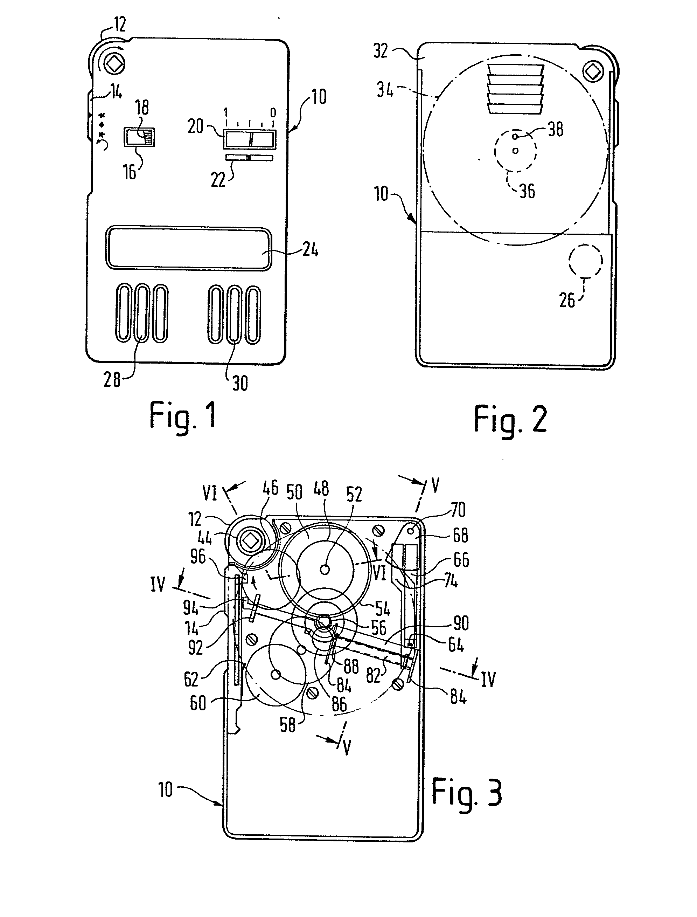

Das in der Fig. 1 dargestellte Gerät umfaßt ein allgemein mit 10 bezeichnetes Gehäuse, dessen Breite ca. 5 cm, dessen Länge ca. 8 cm und dessen Höhe ca. 7 mm betragen. An der in der Fig. 1 linken oberen Ecke ist ein Aufziehrad 12 für das noch zu beschreibende Federwerk gelagert. Darunter befindet sich an der linken Gehäuseseite ein Bedienungsschieber 14, der eine Aufnahmestellung, eine Nullstellung, eine Wiedergabestellung und eine Rücktaststellung für den Magnetkopf einnehmen kann. In seiner Aufnahmestellung und seiner Wiedergabestellung wirkt der Bedienungsschieber 14 mit nicht dargestellten Mikroschaltern einer elektronischen Aufnahme- und Wiedergabeschaltung zusammen, bei der es sich um eine herkömmliche Schaltungsanordnung handeln kann, die daher nicht dargestellt ist. In der oberen Gehäusehälfte ist ein Fenster 16 vorgesehen, durch das hindurch ein die Federspannung des Federwerkes anzeigender Zeiger 18 sichtbar ist. Rechts daneben ist ein weiteres Fenster 20 ausgebildet, in dem durch die Stellung des Magnetkopfträgers der noch zur Verfügung stehende Raum auf der Magnetspeicherplatte angezeigt wird. Unter dem Fenster 20 ist ein Schlitz 22 in dem Gehäuse ausgebildet, durch den hindurch der Magnetkopfträger in noch näher zu beschreibender Weise von Hand verstellt werden kann.

In der unteren Gehäusehälfte ist durch ein längliches Rechteck eine Anordnung von photoelektrischen Elementen dargestellt, die zusammen eine photoelektrische Spannungsquelle 24 bilden. Diese Spannungsquelle dient zum Aufladen eines Akkumulators 26 (Fig. 2), der die Stromquelle zur Speisung der Aufnahme- und Wiedergabeschaltung bildet. Unterhalb der photoelektrischen Spannungsquelle 24 erkennt man Durchtrittsschlitze 28 und 30 in dem Gehäuse 10, unter denen sich ein nicht dargestelltes Mikrophon bzw. ein nicht dargestellter Lautsprecher befinden.

Auf der in der Fig. 2 dargestellten anderen Flachseite des Gerätes ist das Gehäuse 10 mit einem Deckel 32 versehen, der mit Hilfe einer nicht dargestellten Schnappverbindung an dem restlichen Gehäuse gehalten und abgenommen oder verschoben werden kann, um Zugriff zu der gestrichelt angedeuteten Magnetspeicherplatte 34 zu haben. Bei dieser Magnetspeicherplatte handelt es sich um eine flexible Magnetspeicherplatte, die auf einer gestrichelt angedeuteten Antriebsscheibe 36 gelagert ist. Die Antriebsscheibe 36 trägt einen achsparallel verlaufenden Zapfen 38, der zur Festlegung der Nullstellung der Magnetspeicherplatte dient, so daß der Beginn einer Aufzeichnungsspur wiedergefunden werden kann.

Im folgenden sollen nun der Antrieb der Magnetspeicherplatte sowie die Steuerung eines zur Tonaufzeichnung und Tonwiedergabe dienenden Magnetkopfes beschrieben werden.

In der Fig. 3 ist das zum Antrieb der Magnetspeicherplatte dienende Federwerk schematisch dargestellt,
dessen drehbare Teile in zwei gehäusefesten Lagerplatten 40 und 42 (Fig. 6) gelagert sind. Auf der
Welle des Aufziehrades 12 sitzt drehfest ein Zahnrad 44, das die Drehbewegung des Aufziehrades 12
über ein Zwischenzahnrad 46 auf ein Zahnrad 48 überträgt, das drehfest auf der mit dem einen Ende
einer Antriebsfeder 50 verbundenen Federwelle 52
sitzt. Das mit dem anderen Ende der Antriebsfeder 50
verbundene Federgehäuse 54 treibt über einen Zahnkranz an seinem Außenumfang eine Welle 56, auf der
die Lagerscheibe 36 für die Magnetspeicherplatte 34
sitzt. Zur Konstanthaltung der Antriebsdrehzahl
wird von der Welle 56 her über ein Zwischenzahnrad
58 ein Fliehkraftregler 60 angetrieben, der nicht
näher beschrieben ist. Mit dem Fliehkraftregler tritt
in der Stopstellung des Bedienungsschiebers 14 ein
an diesem befestigtes Bremselement 62 in Eingriff
und stopt dadurch die Drehung der Welle 56. Bei
Freigabe des Fliehkraftreglers dreht sich die
Welle 56 praktisch sofort mit der gewünschten Betriebsdrehzahl, so daß Verzerrungen bei der Aufnahme
und Wiedergabe, die durch das Anhalten und Loslaufen
des Federwerkes auftreten könnten, minimal sind.

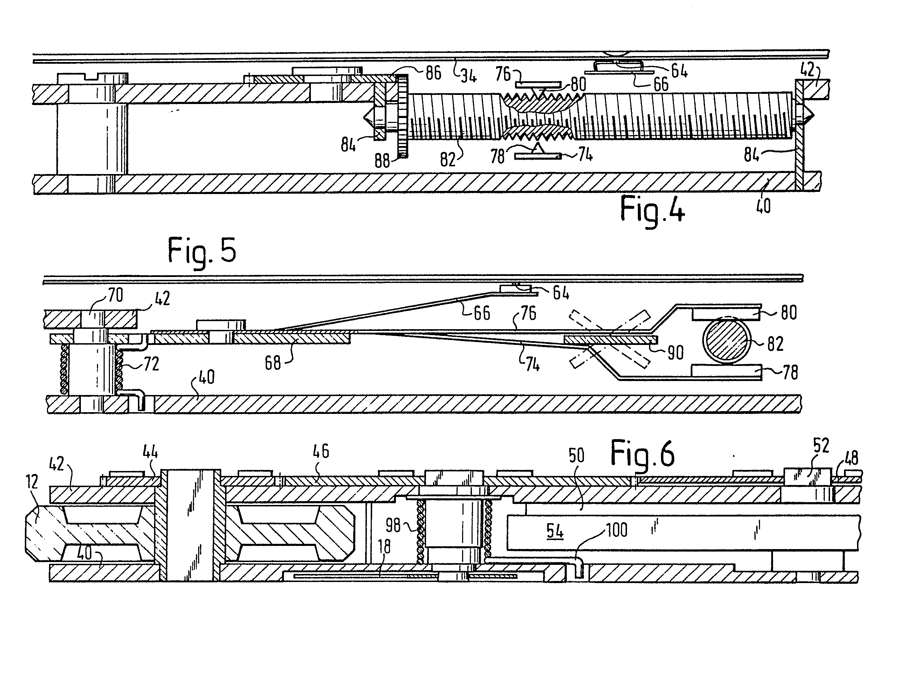

Von der Welle 56 wird ferner der Antrieb für den
Magnetkopf 64 abgeleitet. Dieser befindet sich an
dem einen Ende einer Federzunge 66, die mit ihrem
anderen Ende an einem Schwenkarm 68 befestigt ist,
der um eine zur Lagerwelle 56 der Magnetspeicherplatte 34 parallele Schwenkachse an den Lagerplatten 40 und 42 schwenkbar gelagert ist, so daß der Magnetkopf 64 bei einer Verschwenkung des Schwenkarmes 68 eine annähernd radiale Bewegung bezüglich der Lagerachse 56 der Magnetspeicherplatte 34 ausführt. Der Schwenkarm 68 ist mittels einer Schraubenfeder 72 in eine der radial äußeren Stellung des Magnetkopfes entsprechende Stellung vorgespannt. Die Schraubenfeder 72 umgibt die Achse 70 und ist mit ihrem einen Ende in der Lagerplatte 40 und mit ihrem anderen Ende in dem Schwenkarm 68 eingehängt, wie man diese in der Fig. 5 erkennt.

An dem Schwenkarm 68 sind ferner annähernd parallel zu der Federzunge 66 zwei Federschenkel 74 und 76 befestigt, die an ihrem freien Ende jeweils einen im Querschnitt keilförmigen Spurkörper 78 bzw. 80 tragen. Diese Spurkörper 78 und 80 sind zum Eingriff in den Gewindegang einer Gewindespindel 82 bestimmt, die sich annähernd radial bezüglich der Lagerachse 56 erstreckt und in gehäusefesten Lagerböcken 84 drehbar gelagert ist. Die Gewindespindel 82 wird über ein an der Lagerplatte 42 drehbar gelagertes Zahnrad 86 und ein mit der Gewindespindel 82 drehfestes Zahnrad 88 von der Lagerwelle 56 her angetrieben, so daß die Drehzahl der Lagerwelle 56 und die Drehzahl der Gewindespindel 82 in einem festen Verhältnis zueinander stehen. Dabei entspricht eine Umdrehung der Gewindespindel 82 einer Umdrehung der Lagerwelle 56 oder einem ganzzahligen Vielfachen davon.

Wie man erkennt, wird bei einer Drehung der Gewindespindel 82 der jeweils mit ihr in Eingriff befindliche Spurkörper in Richtung auf die Lagerachse 56 verschoben und nimmt dabei über den Federschenkel 74 oder 76 den Schwenkarm 68 gegen die Spannung der Rückstellfeder 72 mit, so daß auch der Magnetkopf 64 in definierter Weise in Richtung auf die Lagerachse 56 bewegt wird und somit bei Drehung der Magnetspeicherplatte einer spiraligen Aufzeichnungsspur auf dieser Magnetspeicherplatte folgt.

Es soll nun beschrieben werden, wie der Magnetkopf auf der Magnetspeicherplatte zurückgestellt werden kann, um aufgezeichnete Abschnitte wiedergeben oder korrigieren zu können. Während der Aufzeichnung und der Wiedergabe befindet sich der in der Fig. 4 und 5 dargestellte obere Spurkörper 80 mit der Gewindespindel 82 in Eingriff. Soll nun der Magnetkopf nach radial außen verstellt werden, so kann dies zunächst schrittweise erfolgen, wobei der Spurkörper 80 jeweils um eine Windung radial nach außen versetzt wird. Hierzu erstreckt sich parallel zur Gewindespindel 82 zwischen den beiden Federschenkeln 74 und 76 eine Flachstange 90, die in den Lagerböcken 84 sowie in einem weiteren gehäusefesten Lagerbock 92 nahe dem Bedienungsschieber 14 um ihre Längsachse schwenkbar gelagert ist. In der in der Fig. 5 dargestellten Mittellage hat die Flachstange 90 keine Berührung mit dem Federschenkel 76, so daß dieser den Spurkörper 80 in Eingriff mit der Gewindespindel 82 hält. Dagegen drückt die Flachstange 90 gegen die Innenseite des Federschenkels 74 und hält dadurch den Spurkörper 78 außer Eingriff mit der Gewindespindel 82.

Wird die Flachstange 90 in der Fig. 5 um ihre Längsachse im Uhrzeigersinn in die gestrichelt angedeutete Stellung geschwenkt, so wird der Federschenkel 76 nach oben gedrückt und der Spurkörper 80 aus dem Gewindegang der Gewindespindel 82 ausgehoben. Gleichzeitig drückt der Federschenkel 74, der nun keine Berührung mehr mit der Flachstange 90 hat und ebenfalls in Richtung auf die Spindel 82 vorgespannt ist, den Spurkörper 78 in den Gewindegang der Gewindespindel 82.

In der Fig. 4 erkennt man, daß die beiden Spurkörper 78 und 80 mit ihren Keilscheiteln zumindest annähernd in einer gemeinsamen achsnormalen Ebene liegen. Da die Gewindegänge dagegen eine Neigung gegenüber dieser Ebene aufweisen, befindet sich der Spurkörper 78 mit seinem Keilscheitel gegenüber der Scheitellinie des Gewindes, wenn der Spurkörper 80 in den Gewindegang eingreift und umgekehrt. Wird nun, wie dies oben beschrieben wurde, der Spurkörper 80 aus dem Gewinde-gang ausgehoben, so gleitet er unter der Wirkung der Rückstellfeder an der in der Fig. 4 rechten Flanke des Gewindeganges entlang nach oben, während der Spurkörper 78 an der in der Fig. 4 linken Flanke eines Gewindeganges in diesen eintaucht. Dadurch werden die beiden Spurkörper und mit ihnen der Schwenkarm 68 um eine halbe Gangbreite in der Fig. 4 nach rechts versetzt. Kehrt nun die Flachstange 90 in ihre durch ausgezogene Linien wiedergegebene Mittelstellung zurück, so wird der Spurkörper 78 aus dem Gewindegang ausgehoben, während der Spurkörper 80 in den in der Fig. 4 rechts anschließenden nächsten Gewindegang eintaucht, wobei nochmals eine

- 14 -

Verschiebung um eine halbe Gangbreite erfolgt.
Durch diese Hin- und Herdrehung der Flachstange 90
kann somit das aus den Spurkörpern 78 und 80 gebildete Eingriffselement um eine Windung auf der Gewindespindel zurückversetzt werden, was einem Sprung
des Magnetkopfes auf der Magnetspeicherplatte um
eine Spiralwindung der Aufzeichnungsspur radial
nach außen entspricht.

Wird in der Fig. 5 die Flachstange 90 im Gegenuhrzeigersinn in die durch strichpunktierte Linien
wiedergegebene Stellung verschwenkt, so werden beide Federschenkel 74 und 76 gespreizt, so daß gleichzeitig beide Spurkörper 78 und 80 außer Eingriff
mit der Gewindespindel 82 sind. In diesem Augenblick
kann der Schwenkarm 68 unter der Wirkung der Rückstellfeder radial ganz nach außen verschwenkt werden,
so daß der Magnetkopf 64 in seine dem Beginn einer
Aufzeichnungsspur entsprechende Nullstellung zurückkehren kann. Durch rechtzeitiges Verschwenken der
Flachstange 90 in ihre Mittellage kann jedoch auch
der Spurkörper 80 an einer bestimmten Stelle wieder
in die Gewindespindel 82 eingeklinkt werden, so daß
nach dem Überspringen einiger Windungen der Gewindespindel die Antriebsverbindung zwischen dem Schwenkarm 68 und der Gewindespindel wieder hergestellt ist.
Dies entspricht dem Zurückspringen des Magnetkopfes
um einige Spiralwindungen der Aufzeichnungsspur.

Wie man in der Fig. 3 erkennt, weist die Flachstange
90 an ihrem dem Bedienungsschieber 14 nahen Ende
einen Fortsatz 94 mit einer nicht dargestellten
Schrägfläche auf. Der Bedienungsschieber 14 ist mit einer Nase 96 versehen, die auf die Schrägfläche des Fortsatzes 94 aufgleitet und dadurch die Flachstange 90 verschwenkt, wenn der Bedienungsschieber 14 in seine in der Fig. 1 unterste Stellung verschoben wird.

Aus der vorstehenden Beschreibung erkennt man ferner, daß es sehr einfach ist, mit Hilfe eines spitzen Gegenstandes, beispielsweise der Mine eines Kugelschreibers, durch den Schlitz 22 des Gehäuses hindurch den Federschenkel 76 von der Spindel 82 wegzudrücken, den Spurkörper 80 dadurch aus der Gewindespindel 82 auszuklinken und dann den Schwenkarm 68 um einen gewünschten Betrag in der einen wie in der anderen Richtung zu verschwenken und somit den Magnetkopf in der Aufzeichnungsspur vorwärts oder rückwärts springen zu lassen.

Anhand der Fig. 6 schließlich soll noch die Funktionsweise der Anzeigevorrichtung beschrieben werden, die den Spannungszustand der Antriebsfeder anzeigt.

Die Entspannung der Antriebsfeder 50 über das Zwischenzahnrad 46 und das Aufzugsrad 12 wird dadurch verhindert, daß die Welle des Zwischenzahnrades 46 von einer Schlingfeder 98 umgeben ist, die mit ihrem einen Ende 100 in der Lagerplatte 40 eingehängt ist und sich bei Rückdrehung des Zwischenrades 46 entgegen der in der Fig. 3 eingezeichneten Pfeilrichtung fest um die Welle des Zwischenrades 46 schlingt, so daß dieses gebremst wird. Das in der Lagerplatte 40 eingehängte Ende der Schlingfeder 98 ist in Form eines längeren Federschenkels ausgebildet, der sich beim Zuziehen der Schlingfeder 98 mehr oder weniger stark durchbiegt, je nach dem, mit welcher Kraft die Antriebsfeder gespannt ist. Auf der Welle des Zwischenrades 46 sitzt mit einer gewissen Reibung, jedoch frei drehbar ein Schleppzeiger 18, der beim Aufziehen der Antriebsfeder 50 in seiner Nullstellung auf der Welle des Zwischenrades 46 durchrutscht, beim Loslassen des Aufziehrades jedoch durch die begrenzte Rückdrehung der Welle des Zwischenrades 46 um einen bestimmten Betrag mitgenommen wird, der davon abhängt, wie stark der Federschenkel 100 der Schlingfeder 98 durchfedert. Somit ist der Ausschlag des Schleppzeigers 18 ein Maß für den Spannungszustand der Antriebsfeder.

Patentansprüche:

1. Gerät zur magnetischen Tonaufzeichnung und -wiedergabe, umfassend ein Gerätegehäuse, eine Antriebsvorrichtung für eine Magnetspeicherplatte als Aufzeichnungsträger, einen relativ zu dieser verstellbar angeordneten Aufzeichnungs- und Wiedergabe-Magnetkopf, eine elektronische Aufzeichnungs- und Wiedergabe-Schaltung und eine Stromquelle, dadurch g e k e n n z e i c h n e t , daß die Stromquelle (26) im wesentlichen nur die Aufzeichnungs- und Wiedergabe-Schaltung speist und daß die Antriebsvorrichtung von einem mechanischen Federwerk (12, 44, 46, 48, 50, 54, 56, 58, 60) gebildet ist.

2. Gerät nach Anspruch 1, dadurch g e k e n n - z e i c h n e t , daß die Stromquelle von einer Batterie gebildet ist.

3. Gerät nach Anspruch 1, dadurch g e k e n n - z e i c h n e t , daß die Stromquelle von einem Akkumulator (26) gebildet ist.

4. Gerät nach Anspruch 3, dadurch g e k e n n z e i c h n e t , daß es eine photo- elektrische Spannungsquelle (24) zur Aufladung des Akkumulators (26) aufweist.

5. Gerät nach einem der Ansprüche 1 bis 4, dadurch g e k e n n z e i c h n e t , daß der Magnet- kopf (64) an einem Magnetkopfträger (66, 68) angeordnet ist, der an einem gehäusefesten Teil beweglich gelagert ist und mit dem Federwerk (12, 44, 46, 48, 50, 54, 56, 58, 60) in Antriebsverbindung steht.

6. Gerät nach Anspruch 5, dadurch g e k e n n - z e i c h n e t , daß der Magnetkopfträger (66, 68 mit dem Federwerk (12, 44, 46, 48, 50, 54, 56, 58, 60) über ein Stellgetriebe (78, 80, 82, 86, 88) koppelbar ist.

7. Gerät nach Anspruch 6, dadurch g e k e n n - z e i c h n e t , daß das Stellgetriebe (78, 80, 82, 86, 88) eine Kupplungsanordnung (78, 80, 90) zur wahlweisen Unterbrechung der Antriebsverbindung zwischen dem Federwerk (12, 44, 46, 48, 50, 54, 56, 58, 60) und dem Magnetkopfträger (66, 68) umfaßt und daß Mittel (72) vorgesehen sind, um den Magnetkopfträger (66, 68) bei Betätigung der Kupplung (78, 80, 90) in Richtung auf seine dem Aufzeichnungsbeginn entsprechende Nullstellung zurückzustellen.

8. Gerät nach Anspruch 7, dadurch g e k e n n - z e i c h n e t , daß das Stellgetriebe (78, 80, 82, 86, 88) eine vom Federwerk (12, 44, 46, 48, 50, 54, 56, 58, 60) angetriebene, mindestens annähernd radial bezüglich der Magnetspeicherplatte (34) gerichtete Gewindespindel (82) aufweist, daß mit dem Magnetkopfträger (66, 68) ein wahlweise mit der Gewindespindel (82) in Eingriff bringbares Eingriffselement (78, 80) verbunden ist und daß der Magnetkopfträger (66, 68) in Richtung auf seine Nullstellung vorgespannt ist, wobei die Antriebe von Magnetspeicherplatte (34) und Gewindespindel (82) derart aufeinander abgestimmt sind, daß eine Umdrehung der Gewindespindel (82) einer Umdrehung der Magnetspeicherplatte (34) oder einem ganzzahligen Vielfachen einer Plattenumdrehung entspricht.

9. Gerät nach Anspruch 8, dadurch g e k e n n - z e i c h n e t , daß das Eingriffselement (74, 76) im wesentlichen senkrecht zur Spindelachse verstellbare und zum Eingriff in die Gewindegänge der Gewindespindel (82) bestimmte keilförmige Spurkörper (78, 80) umfaßt, die beiderseits der Spindelachse relativ zueinander derart angeordnet sind, daß jeweils nur einer von ihnen in den Gewindegang eingreift und daß ihre einander zugewandten Keilscheitel in Richtung der Spindelachse um (n x h) gegeneinander versetzt sind, wobei n Null oder eine ganze Zahl und h die Steigung des Spindelgewindes bezeichnen.

10. Gerät nach Anspruch 9, dadurch g e k e n n - z e i c h n e t , daß die Spurkörper (78, 80) an mit dem Magnetkopfträger (68, 66) verbundenen Federschenkeln (74, 76) angeordnet und in Richtung auf die Gewindespindel (82) vorgespannt sind und daß zwischen den Federschenkeln (74, 76) ein Spreizkörper (90) angeordnet ist, durch dessen Betätigung wahlweise der eine oder der andere Spurkörper (78, 80) in Eingriff mit der Gewindespindel (82) bringbar ist.

11. Gerät nach Anspruch 10, dadurch g e k e n n -

zeichnet, daß in einer zweiten Stellung des Spreizkörpers (90) beide Spurkörper (78, 80) von der Gewindespindel (82) abhebbar sind.

12. Gerät nach Anspruch 10 oder 11, dadurch gekennzeichnet, daß der Spreizkörper von einer sich parallel zur Gewindespindel (82) über mindestens deren Länge erstreckenden Flachstange (90) gebildet ist, die um ihre Längsachse schwenkbar gelagert und durch ein Bedienungselement (14) des Gerätes verschwenkbar ist.

13. Gerät nach einem der Ansprüche 8 bis 12, dadurch gekennzeichnet, daß der Eingriff zwischen der Gewindespindel (82) und dem Eingriffselement (78, 80) von außen her unter Umgehung des Bedienungselementes (14) lösbar und der Magnetkopfträger (66, 68) in beiden Stellrichtungen verstellbar ist.

14. Gerät nach einem der Ansprüche 1 bis 13, dadurch gekennzeichnet, daß der Magnetkopfträger (66, 68) von einem Schwenkarm gebildet ist, der um eine zur Magnetspeicherplattenachse (56) parallele Schwenkachse (70) derart schwenkbar gelagert ist, daß der Magnetkopf (64) bezüglich der Magnetspeicherplatte (34) eine im wesentlichen radiale Bewegung ausführt.

15. Gerät nach einem der Ansprüche 1 bis 14, dadurch gekennzeichnet, daß es eine Anzeigevorrichtung (16, 18) zur Anzeige des Spannungszustandes der Antriebsfeder (50) aufweist.

16. Gerät nach Anspruch 15, dadurch  g e k e n n -
    z e i c h n e t , daß die Anzeigevorrichtung eine
    von der Federwelle (52) antreibbare Welle aufweist, die von einer sich in Entspannungsrichtung
    der Antriebsfeder festziehenden Schlingfeder (98)
    umgeben ist und auf der ein Schleppzeiger (18)
    gelagert ist, dessen Stellung durch ein Gehäuse-
    fenster (16) sichtbar ist.

Fig. 1

Fig. 2

Fig. 3

**Fig. 4**

**Fig. 5**

**Fig. 6**